# EUROPEAN PATENT APPLICATION

(11) **EP 4 793 472 A1**
(43) Date of publication of application: **19.08.2026**
(21) Application number: 26152922.6
(22) Date of filing: 20.01.2026
(51) Int. Cl.: F01N 3/20, F01N 3/28, F01N 13/00, F01N 13/18

(54) **EXHAUST GAS AFTERTREATMENT**

(30) Priority: 13.02.2025 FI 20255117
(71) Applicant: Proventia Oy, 90460 Oulunsalo (FI)
(72) Inventor: Mursu, Ville, 90460 Oulunsalo (FI); Seppälä, Hannu, 90460 Oulunsalo (FI); Amberla, Arno, 90460 Oulunsalo (FI); Aspegren, Kimmo, 90460 Oulunsalo (FI); Tuominen, Lasse, 90460 Oulunsalo (FI)
(74) Representative: Espatent Oy

(57) **Abstract**

An exhaust gas aftertreatment subsystem (100), comprising
a second housing part (120) fixed to a first housing part (110) forming a passage (150) which is shaped to guide exhaust gas sideways from an inlet (130) and then turn the exhaust gas to an outlet (140);
the first dimension (d1) defining a thickness of the subsystem (100) at a centre (340) of the outlet (140)is at most 25 % of the second dimension defining a maximum opening of the outlet (140).
The subsystem is used as a reversing flow cover for exhaust gases, and particular as a mixing device for urea attached to an SCR-catalyst.

## Description

### TECHNICAL FIELD

The present disclosure generally relates to exhaust gas aftertreatment.

### BACKGROUND

This section illustrates useful background information without admission of any technique described herein representative of the state of the art.

Exhaust gases may require aftertreatment by use of a suitable reactant. For example, exhaust gas of diesel engines may require aftertreatment to reduce nitrogen oxides in the exhaust gas. To this end, urea suspension is dosed into a stream of exhaust gas as a spray of small droplets. The droplets evaporate and ultimately release gaseous ammonium that reduces nitrogen oxides (NOₓ) into elementary nitrogen (N) and oxide (O₂). There are some practical difficulties in this process, including that a) how to mix the urea suspension so that the reduction of nitrogen oxides takes place to a sufficient extent, b) how to prevent accruing of urea onto exposed surfaces of the aftertreatment equipment, c) how to avoid forming of excess backpressure by the aftertreatment equipment, and d) how to fit in the required aftertreatment equipment. These objectives are somewhat contradictory: a greater turbulence tends to improve mixing of the urea solution droplets while inhibiting flow through by increasing pressure. It is easier to reduce pressure and to avoid accrual of urea by using larger chambers and conduits, while compactness of the equipment suffers.

In case of tractors, it is desirable to allow the driver to see the front wheels while driving. To this end, the engine with its aftertreatment equipment must fit into a relatively narrow space. There is rarely if ever room for arranging the engine and the exhaust gas aftertreatment system in a linear sequence; available room may favour an arrangement in which exhaust gas flow is reversed and brought back through the aftertreatment equipment. However, in reversing or significantly changing exhaust gas flow directions, backpressure tends to be increased significantly or compacting of the footprint of the aftertreatment equipment may be prevented or significantly harmed. This is particularly the case with ever increasing emission control requirements and necessary instrumentation to measure different properties of the exhaust gas before and after the aftertreatment.

The present invention aims at providing a new alternative to balance between these at least partially conflicting goals. Alternatively, the present invention aims at providing a new technical alternative.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided an exhaust aftertreatment subsystem, comprising
a first housing part;
a second housing part fixed to the first housing part;
an inlet at the first housing part, the second housing part, or both the first housing part and second housing part; and
an outlet at the first housing part; wherein
the first housing part and the second housing part jointly form a passage that connects the inlet to the outlet;
the passage is shaped to guide exhaust gas sideways from the inlet and then turn the exhaust gas to the outlet;
a first dimension defines a thickness of the subsystem at a centre of the outlet;
a second dimension defines a maximum opening of the outlet, such as a diameter in case of a circle; and
the first dimension is at most 25 % of the second dimension.

The inlet and the outlet may be so aligned that the passage directs exhaust gas sideways from the inlet to the outlet across the entire outlet.

The passage may be shaped to turn the exhaust gas by at least 70; 80; or 83 degrees to the outlet. The passage may be shaped to turn the exhaust gas by at most 80; 87; or 90 degrees to the outlet. An extent of the turning may be determined along an average centreline of the passage defined across the outlet.

The passage may be gas-tight. The first housing part and the second housing part may surround the passage gas-tightly. The first housing part and the second housing part may be visible from outside when the exhaust gas aftertreatment subsystem is installed to a diesel engine.

A third dimension may define a maximum thickness of the subsystem. The third dimension may be at most 50 % of the second dimension. Alternatively, the third dimension may be at most 40 % of the second dimension.

The subsystem may have a projection.

An outlet plane may be defined by a portion of the outlet with which the outlet is connectable to a downstream exhaust gas processing element. The projection may be defined in parallel with the outlet plane.

The projection may be formed of a first circular part and a merged part. The merged part may join tangentially with the first circular part.

The merged part may be rounded apart of the first circular part.

The merged part may be a second circular part. The second circular part may have a radius smaller than that of the first circular part. Alternatively, the merged part may be an irregular quadrilateral part.

The first circular part may be formed of at least 180 degrees of a circumference.

The irregular quadrilateral part may have one acute angle and one obtuse angle. The acute angle and the obtuse angle may be rounded with substantially same rounding radius. Substantially same may refer to same or no more than 5 % different. The exhaust aftertreatment subsystem may be dimensioned such that rounding circles matching curvatures of the acute and obtuse angles intersect centres of each other. The rounding circles may further overlap a circle drawn along the first circular part. The rounding circles and the circle drawn along the first circular part may jointly cover the projection of the subsystem to such an extent that that a remainder of the projection has a smaller area than the area of one rounding circle is.

Advantageously, the area of the projection is very efficiently used by the rounded angles at two distant corners apart of the first circular part that covers the outlet. The rounded angles may reduce backpressure so that thickness of the subsystem can be reduced without excessive backpressure.

The outlet may define a central region and a peripheral region.

The subsystem may be formed so that, when in use, the subsystem evens exhaust gas flow between the central region and the peripheral region.

The first housing part may be formed of a metal plate.

The subsystem may comprise, in the outlet, a perforation field that, for evening exhaust gas flow between the central region and the peripheral region. The perforation field may be formed to the metal plate from which the first housing part is formed. The perforation field may be formed by puncturing apertures to the metal plate from which the first housing part is formed. The perforation field may be stamped. The first housing part may be formed from the metal plate by drawing.

Advantageously, by forming the perforation field to the metal plate from which the first housing part is formed, it is possible to avoid separate steps of aligning and orienting a separate piece that comprises the perforation field. Furthermore, errors in the alignment and orienting will be inherently avoided. These factors may facilitate mass production.

The perforation field may be varied for evening exhaust gas flow between leading and trailing ends of the outlet. The perforation field may be varied altering proportion of openings. The perforation field may be varied by shaping the perforation field. The perforation field may be concave so that the passage is shallower at the centre of the outlet than at other parts. The passage may be tapered for evening exhaust gas flow between the central region and the peripheral region.

The first housing part may comprise the inlet. The exhaust aftertreatment subsystem may be configured to reverse exhaust gas flow received at the inlet to an exhaust gas flow at the outlet. Alternatively, the second housing part may comprise the inlet. The inlet may be directed in parallel with the outlet. The inlet may be in an inclined angle in comparison to the outlet. The inlet may be configured to receive the exhaust gas with at least 30; 45; or 60 degrees deviation from the direction to which the exhaust gas flows out of the outlet. The inlet may be configured to receive the exhaust gas with at most 40; 55; or 70 degrees deviation from the direction to which the exhaust gas flows out of the outlet.

The first housing part may comprise a first group of accessory mounts.

The first group of accessory mounts may reside adjacent to the outlet. The first group of accessory mounts and the outlet may reside on a same side of the first housing part.

The first group of accessory mounts may be positioned between the outlet and an opposite end of the first housing part. The accessory mounts of the first group may reside on one side of the inlet. The accessory mounts may reside in a series at different distances from the outlet.

Advantageously, the accessory mounts of the first group may be provided using a space that is also otherwise useful for turning direction of incoming exhaust gas. Further advantageously, representability sampling with a sensor mounted to one of the accessory mounts of the first group may be achieved, and / or efficient heat transfer to the exhaust gas may be gained by a heater mounted in one of the accessory mounts of the first group while using same passage space that is turns sideways the incoming exhaust gas.

One or more of the accessory mounts of the first group may be welded to the first housing part. The first group of accessory mounts may comprise a heater mount. The first group of accessory mounts may comprise one or more sensor mounts. The one or more sensor mounts of the first group may comprise a temperature sensor mount. The one or more sensor mounts of the first group may comprise an oxygen sensor mount.

The first housing part may further comprise an outlet connector. The outlet connector may be welded to the metal plate. The outlet connector may be suited for connection to a diesel oxidation catalyst.

The first housing part may further comprise an inlet connector. The inlet connector may be welded to the metal plate. The inlet connector may be suited for connection to an engine exhaust output tube such as a flexible element. The flexible element may compensate for mutual movement of an exhaust gas reception point at an engine in relation to the subsystem.

The second housing part may be formed of a metal plate. The first housing part and the second housing part may jointly form the passage. The first and second housing parts may be welded together.

The first and second housing parts may be attached to each other by a flanged butt weld.

The second housing part may comprise a second group of accessory mounts.

The second housing part may further comprise an inlet connector. The inlet connector may be welded to the metal plate. The inlet connector may be suited for connection to an engine exhaust output tube. The second group of accessory mounts may reside adjacent to the inlet. The second group of accessory mounts and the inlet may reside on a same side of the second housing part. The second group of accessory mounts may be positioned on a side of the passage that separates opposite faces of the subsystem.

One or more of the accessory mounts of the second group may be welded to the second housing part. The second group of accessory mounts may comprise a heater mount. The second group of accessory mounts may comprise one or more sensor mounts. The one or more sensor mounts of the second group may comprise a temperature sensor mount. The one or more sensor mounts of the second group may comprise an oxygen sensor mount. The one or more sensor mounts of the second group may comprise a nitrogen oxide (NOx) sensor mount. The one or more sensor mounts of the second group may comprise a pressure measurement pipe connection or a pressure sensor.

The second housing part may further comprise an inlet connector. The inlet connector may be welded to the metal plate. The inlet connector may be suited for connection to a diesel oxidation catalyst.

The second housing part may further comprise an inlet connector. The inlet connector may be welded to the metal plate. The inlet connector may be suited for connection to an engine exhaust output tube.

The second group of accessory mounts may be positioned at least partly at the inlet. The second group of accessory mounts may be positioned between the outlet and an opposite end of the second housing part. The accessory mounts of the second group may reside on one side of the inlet. The accessory mounts may reside in a series at different distances from the outlet.

Advantageously, the accessory mounts of the second group may be provided using a space that is also otherwise useful for turning direction of incoming exhaust gas. Further advantageously, representability sampling with a sensor mounted to one of the accessory mounts of the second group or heat transfer by a heater mounted in one of the accessory mounts of the second group may be by using the space that is also otherwise useful for turning direction of incoming exhaust gas.

The inlet may be formed by a manufacturing process comprising stamping. The inlet may be formed by a manufacturing process comprising stamping. Openings for the inlet and outlet as well as for the accessory mounts may be formed by stamping one or both of the metal plates that form the first and second housing parts.

The second housing part may comprise technical features such as machine vision alignment markers. The alignment markers may be shaped to the metal plate, e.g., by stamping.

Advantageously, all required apertures may be formed cost-efficiently and reliable alignment by stamping one or two metal plates so facilitating mass-production. The assembly as a whole may be very well-suited to mass-production by efficiently using relatively small amount of material to guide exhaust gas and joints can be both reduced and suited well for the mass-producing. At the same time, the resulting subsystem is very compact. For example, for guiding exhaust gas to a normal 300 mm diameter diesel oxidation filter input, a 100 mm diameter round channel could be used. With the first dimension being at most 25 %, the height of the subsystem is at most 75 mm at the centre of the inlet, which represents a clear space saving in comparison to that required by a 100 mm channel. Moreover, the 100 mm round channel would centrifugally pack exhaust gas to one edge of the outlet and unevenly load the subsequent filter, so a further diffuser would be required with even greater space handicap.

According to a second example aspect there is provided an exhaust gas aftertreatment system comprising the exhaust aftertreatment subsystem.

The exhaust gas aftertreatment system may further comprise an exhaust gas aftertreatment unit. The exhaust gas aftertreatment unit may be directly attached to the exhaust aftertreatment subsystem. The exhaust gas aftertreatment unit may be connected in series with the exhaust gas aftertreatment system.

The exhaust gas aftertreatment unit may be selected from a group consisting of: a diesel oxidation catalyst, DOC; a diesel particulate filter, DPF; a selective catalytic reduction unit, SCR; a combined selective catalytic reduction unit and diesel particulate filter, SCRF.

The exhaust gas aftertreatment system may comprise a plurality of the exhaust gas aftertreatment units. The plurality of exhaust gas aftertreatment units may be of two or more different types. Some of the exhaust gas aftertreatment units may be of a same type. Only one of the exhaust gas aftertreatment units may directly attached to the exhaust gas aftertreatment system, or alternatively more than one of the exhaust gas aftertreatment units may directly attached to the exhaust gas aftertreatment system.

The exhaust gas aftertreatment system may comprise the selective catalytic reduction unit connected to receive exhaust gas processed by the diesel particle filter.

The exhaust gas aftertreatment system may further comprise a post-processing sensing system. The post-processing sensing system may comprise one or more post-processing sensor mounts for respective sensors for monitoring properties of the exhaust gas downstream from the exhaust gas aftertreatment unit or units.

According to a third example aspect there is provided a method in an exhaust aftertreatment subsystem, comprising
maintaining a second housing part fixed to a first housing part;
providing an inlet at the first housing part, the second housing part, or both the first housing part and second housing part; and
providing an outlet at the first housing part; wherein
forming a passage jointly by the first housing part and the second housing part;
connects the inlet to the outlet by the passage;
guiding by the passage exhaust gas sideways from the inlet and then turning the exhaust gas to the outlet;
defining by a first dimension a thickness of the subsystem at a centre of the outlet;
defining by a second dimension a maximum opening of the outlet; the first dimension being at most 25 % of the second dimension.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 shows a 3D-view of an exhaust gas aftertreatment subsystem of an example embodiment;
Fig. 2 shows a side view of the exhaust gas aftertreatment subsystem of Fig. 1;
Fig. 3 shows a top view of the exhaust gas aftertreatment subsystem of Figs. 1 and 2;
Fig. 4 shows a section C-C of the exhaust gas aftertreatment subsystem of Fig. 3;
Fig. 5 shows another side view of the exhaust gas aftertreatment subsystem of Fig. 3;
Fig. 6 shows a detail of Fig. 4;
Fig. 7 shows an exhaust gas aftertreatment system comprising the exhaust gas aftertreatment subsystem of Figs. 1 to 6;
Fig. 8 shows a joining ring of the exhaust gas aftertreatment subsystem of Figs. 1 to 7;
Fig. 9 shows a simplified flow path through the exhaust gas aftertreatment subsystem of Figs. 1 to 8;
Fig. 10 illustrates some aspects of the projection of the exhaust gas aftertreatment subsystem of Figs. 1 to 8;
Fig. 11 illustrates an alternative projection of a different example embodiment;
Fig. 12 illustrates an accessory mount on a second housing part of an example embodiment; and
Fig. 13 shows a schematic flowchart of a method in an exhaust aftertreatment subsystem.

### DETAILED DESCRIPTION

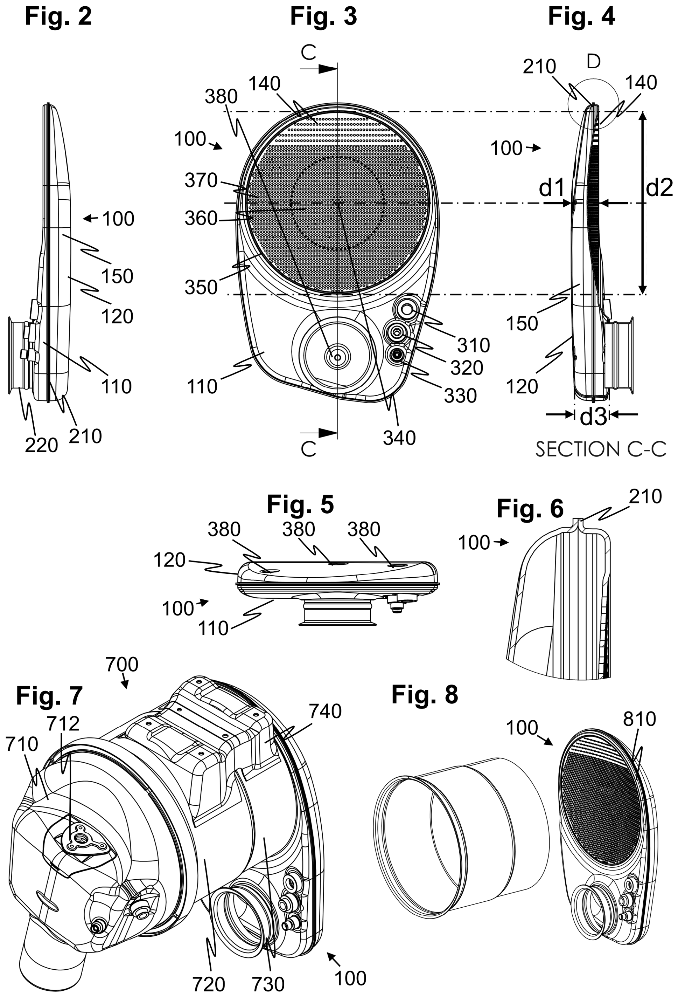

In the following description, like reference signs denote like elements or steps. Figs. 2 to 5 are drawn in same scale.

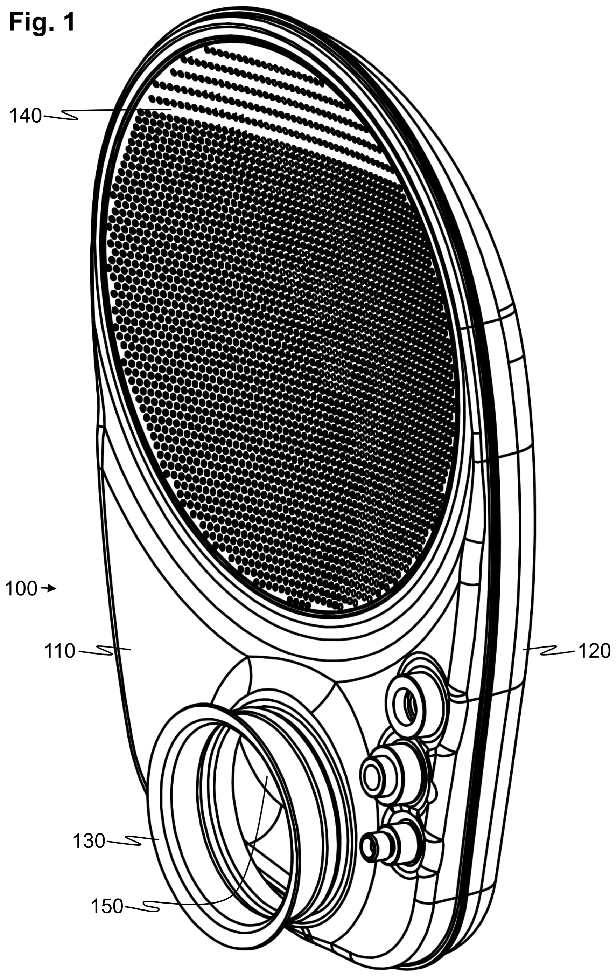

Fig. 1 shows a sectional illustration of an exhaust gas aftertreatment subsystem 100 of an example embodiment, comprising a first housing part 110. A second housing part 120 is fixed to the first housing part. An inlet 130 is at the first housing part 110. In alternative example embodiments, the inlet 130 is in the second housing part, or both the first housing part and second housing part. An outlet 140 is at the first housing part 110. The first housing part 110 and the second housing part 120 jointly form a passage 150 that connects the inlet 130 to the outlet 140. The passage 150 is shaped to guide exhaust gas sideways from the inlet 130 and then turn the exhaust gas to the outlet 140. A first dimension d1 (Fig. 4) defines a thickness of the subsystem 100 at a centre 340 (Fig. 3) of the outlet 140. A second dimension d2 (Fig. 4) defines a maximum opening of the outlet 140, such as a diameter in case of a circle. The first dimension is at most 25 % of the second dimension.

In an example embodiment, the inlet and the outlet are aligned so that the passage directs exhaust gas sideways from the inlet to the outlet across the entire outlet.

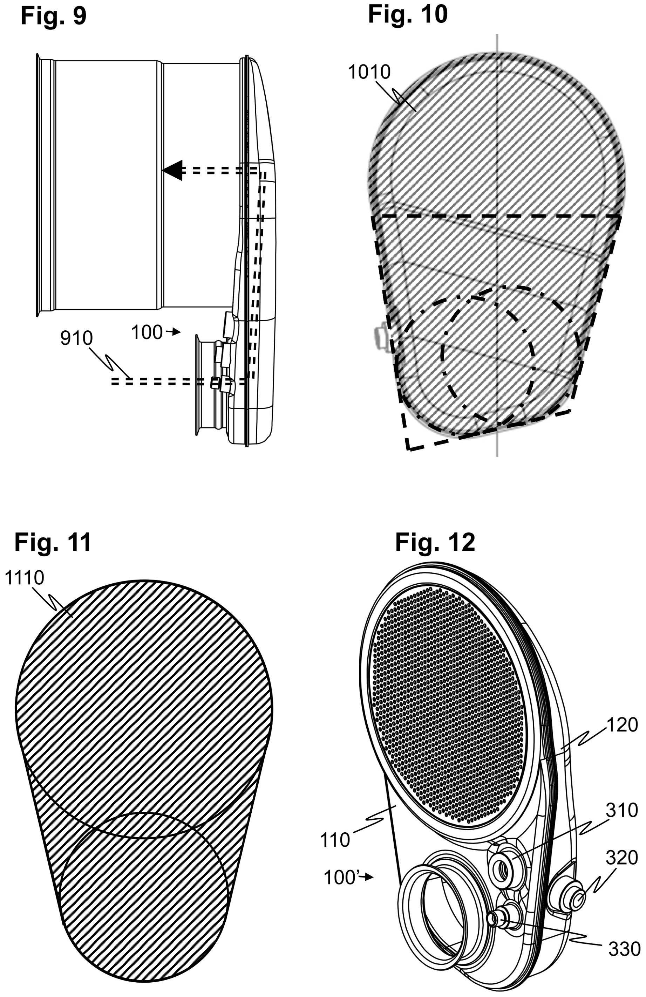

In an example embodiment, the passage 150 turns the incoming exhaust gas after the inlet less than 90 degrees and more than 90 degrees before the inlet. See, e.g., Fig. 4 in which at the centreline, the passage is tapered on the right-hand side so that the passage can be seen as being slightly directed towards a back surface of the second housing part 120 before turning out of the outlet and hence by more than 90 degrees. See also Fig. 9 for a simplified flow path 910 through the exhaust gas aftertreatment subsystem 100.

In an example embodiment, a third dimension d3 defines a maximum thickness of the subsystem 100, see Fig. 4. In an example embodiment, the third dimension d3 is at most 50 % of the second dimension or at most 40 % of the second dimension d2. The third dimension d3 is taken ignoring the inlet 130 and possible other protrusions, i.e., descriptive of a general height of a casing formed by the subsystem for the exhaust gas flow in from the inlet 130 to the outlet 140.

The subsystem has a projection corresponding to that of Fig. 3, and as also illustrated by Fig. 10 with reference sign 1010. As shown in Fig. 10, the projection can be formed of a first circular part and a merged part that is here an irregular quadrilateral part. As also seen in Fig. 10, the irregular quadrilateral part has one acute angle and one obtuse angle. In Fig. 10, the acute angle and the obtuse angle are rounded with substantially same rounding radius, as can be seen from that how the overlaid circles of same size match the rounding. In Fig. 10, it is also seen how the exhaust aftertreatment subsystem can be dimensioned such that rounding circles matching curvatures of the acute and obtuse angles intersect centres of each other. The rounding circles may further overlap a circle drawn along the first circular part. This means that there is beyond the rounding at each corner for reducing backpressure induction, there is little space spent for else. Yet, thanks to the quadrilateral shape, some space is left beside the inlet for accommodating mounts for different sensors and a heater.

Fig. 11 shows an example embodiment of a circle-based projection 1110 that is formed by combining two circles of different sizes by tangential connector lines. It is also possible that the two circles are of same sizes, e.g., to provide for more space for different accessories around the inlet.

Advantageously, the area of the projection as a whole is also very efficiently used by the rounded angles at two distant corners apart of the first circular part that covers the outlet. The rounded angles may reduce backpressure so that thickness of the subsystem can be reduced without excessive backpressure.

In an example embodiment, the outlet 140 defines a central region 360 and a peripheral region 370 (see Fig. 3). In an example embodiment, the central region is defined as a portion of 25 % of a cross-sectional area of the outlet 140. Fig. 4 shows the sectional drawing as if the piece were cut and looked at from a side. A portion behind the sectioning line C-C is also visible in Fig. 4, which causes that small apertures behind the sectioning line of Fig. 33 appear in Fig. 4 as a dark mass. Still, at the section line, the outlet 140 is defined by a concave surface with perforations represented by the dark dots. This shape is useful for evening exhaust gas flow between the central region and the peripheral region. Moreover, because of the required approximately 90-degree turn, it is apparent that the pressure in Fig. 4 sectioned passage is at a peak in a top portion of the passage. To even out this effect, the perforation is sparser at that portion of the outlet, as seen in Fig. 3.

In an example embodiment, the first housing part is made of a metal plate.

As seen in Fig. 3, in an example embodiment, the outlet comprises a perforation field 350 for evening exhaust gas flow between the central region and the peripheral region. In an example embodiment, the perforation field 350 is formed to a metal plate from which the first housing part is formed.

Turning back to the maximum opening, the maximum opening is defined in the present document for a perpendicular projection of a downstream end of the passage 150 through which exhaust gas exits to the outlet 140. For example, even if the perforation field 350 were concave and thus had a greater surface area than when formed planar, the maximum opening would be defined by the spacing of opposite extremes of the perforation field. On the other hand, if the outlet 140 were formed so that there is a closed margin around the perforation field 350, that closed margin would be excluded from the maximum opening.

In Figs. 1 to 9, the first housing part comprises also the inlet 130. Hence, the exhaust aftertreatment subsystem basically reverses exhaust gas flow received at the inlet to an exhaust gas flow at the outlet. Alternatively, the second housing part comprise the inlet, e.g., in parallel with the outlet or in an inclined angle in comparison to the outlet.

Let us return to sensors and a heater that can be mounted to exhaust gas space. In an example embodiment, the first housing part 110 comprises a first group of accessory mounts 310, 320, 330, e.g., adjacent to the outlet (and inlet, in embodiments in which the first housing part 110 comprises the inlet 130). In an example embodiment, the first group of accessory mounts and the outlet 140 reside on a same side of the first housing part. Fig. 3 shows these reference signs.

In an example embodiment, the first group of accessory mounts are positioned between the outlet 140 and an opposite end of the first housing part 110. In an example embodiment, the accessory mounts 310, 320, 330 of the first group may reside on one side of the inlet 130. In an example embodiment, as in Fig. 3, the accessory mounts may reside in a series at different distances from the outlet.

In an example embodiment, the first housing part 110 further comprises an inlet connector 220. In an example embodiment, the inlet connector 220 is welded to the first housing part 110.

In an example embodiment, the first housing part 110 and the second housing part 120 are welded together, e.g., by a flanged butt weld 210, see Figs. 2, 4, and 6.

In an example embodiment, the second housing part 120 comprises a second group of accessory mounts. See, e.g., Fig. 12 illustrating an alternative exhaust gas aftertreatment subsystem 110' with one accessory mount 320 on the second housing part.

In an example embodiment, the first and second housing parts and the accessory mounts entirely form the passage 150. In an example embodiment, one or more supplementary parts may form one or more portions of the passage 150. For example, a service lid (not shown) may be provided, e.g., on the second housing part 120 for providing maintenance access into the passage and / or the perforation field 350. In an example embodiment, an insulation is provided around one or both of the first housing part 110 and the second housing part 120. In an example embodiment, the insulation is attached to the housing parts 110, 120 before attachment, and also other parts such as the accessory mounts may be integrated with the housing parts.

In an example embodiment, the inlet 130 is formed using a manufacturing process comprising stamping.

In an example embodiment, openings for the inlet 130 and the outlet 140 as well as for the accessory mounts 310, 320, 330 may be formed by stamping a metal plate that forms the first housing part 110 and / or a metal plate that forms the second housing part 120. Advantageously, all required apertures may be formed cost-efficiently and reliable alignment by stamping one or two metal plates so facilitating mass-production. The assembly as a whole may be very well-suited to mass-production by efficiently using relatively small amount of material to guide exhaust gas and joints can be both reduced and suited well for the mass-producing. At the same time, the resulting subsystem is very compact. For example, for guiding exhaust gas to a normal 300 mm diameter diesel oxidation filter input, a 100 mm diameter round channel could be used. With the first dimension being at most 25 %, the height of the subsystem is at most 75 mm at the centre of the inlet, which represents a clear space saving in comparison to that required by a 100 mm channel. Moreover, the 100 mm round channel would centrifugally pack exhaust gas to one edge of the outlet and unevenly load the subsequent filter, so a further diffuser would be required with even greater space handicap in comparison to a less thick, or shallower, implementation of Fig. 1, for example.

In an example embodiment, the second housing part 120 comprises technical features such as machine vision alignment markers 380 shown in Figs. 3 and 5. The alignment markers may be shaped to the metal plate, e.g., by stamping. The alignment markers may be used in manufacturing to monitor or control positioning of the second housing part 120.

Fig. 7 shows an exhaust gas aftertreatment system 700 comprising the exhaust aftertreatment subsystem 100 and subsequent exhaust gas aftertreatment units, including a selective catalytic reduction unit, SCR, 710, a diesel particulate filter (in Fig. 7, only a mixer and doser part drawn, with a doser mount 712 visible), DPF, 720, and a diesel oxidation catalyst 730. Fig. 7 further illustrates a mounting structure 740 that is attached, e.g., by welding, to the SCR 710 and the DPF 720 and so indirectly also the exhaust gas aftertreatment system 700.

As can be appreciated, the exhaust aftertreatment subsystem 100 provides a very shallow and compact solution for sideways shifting and potentially reversing the exhaust gas flow arriving from a diesel engine.

In an example embodiment, the exhaust aftertreatment subsystem 100 is also well suited to mass production in terms of the attachment of the exhaust aftertreatment subsystem 100 with the diesel oxidation catalyst 730. In an example embodiment, the exhaust aftertreatment subsystem 100 comprises a welding joint ring 810 that resides in a plane for welding together the exhaust aftertreatment subsystem 100 and the diesel oxidation catalyst. Fig. 8 illustrates this example embodiment. For sake of clarity, Fig. 8 is drawn without internal structures of the DOC and DPF.

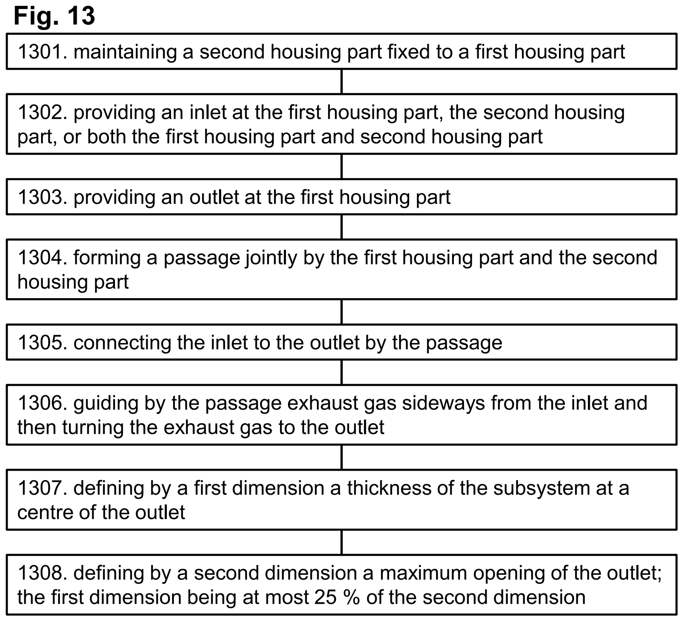

Fig. 13 shows a schematic flowchart of a method in an exhaust aftertreatment subsystem, comprising
1301. maintaining a second housing part fixed to a first housing part;
1302. providing an inlet at the first housing part, the second housing part, or both the first housing part and second housing part;
1303. providing an outlet at the first housing part;
1304. forming a passage jointly by the first housing part and the second housing part; 1305. connecting the inlet to the outlet by the passage;
1306. guiding by the passage exhaust gas sideways from the inlet and then turning the exhaust gas to the outlet;
1307. defining by a first dimension a thickness of the subsystem at a centre of the outlet; and
1308. defining by a second dimension a maximum opening of the outlet; the first dimension being at most 25 % of the second dimension.

Various embodiments have been presented. It should be appreciated that in this document, words comprise; include; and contain are each used as open-ended expressions with no intended exclusivity.

The foregoing description has provided by way of non-limiting examples of particular implementations and embodiments a full and informative description of the best mode presently contemplated by the inventors for carrying out the invention. However, the invention is not restricted to details presented in the foregoing, but implementable in other embodiments using equivalent means or in different combinations of embodiments.

Furthermore, some of the features of the afore-disclosed example embodiments may be used to advantage without the corresponding use of other features. The foregoing shall be considered as merely illustrative of the principles of the present invention, and not in limitation, so only the appended claims limit the scope of the invention.

## Claims

1. An exhaust gas aftertreatment subsystem (100), comprising
a first housing part (110);
a second housing part (120) fixed to the first housing part (110);
an inlet (130) at the first housing part (110), at the second housing part (120), or at both the first housing part (110) and the second housing part (120);
an outlet (140) at the first housing part (110); wherein
the first housing part (110) and the second housing part (120) jointly form a passage (150) that connects the inlet (130) to the outlet (140);
the passage (150) is shaped to guide exhaust gas sideways from the inlet (130) and then turn the exhaust gas to the outlet (140);
a first dimension (d1) defines a thickness of the subsystem (100) at a centre (340) of the outlet (140);
a second dimension (d2) defines a maximum opening of the outlet (140); and
the first dimension (d1) is at most 25 % of the second dimension.

2. The exhaust gas aftertreatment subsystem (100) of claim 1, wherein
a third dimension (d3) defines a maximum thickness of the subsystem (100); and
the third dimension (d3) is at most 50 % of the second dimension.

3. The exhaust gas aftertreatment subsystem (100) of claim 1 or 2, wherein
the outlet (140) defines a central region and a peripheral region; and
the subsystem (100) is formed so that, when in use, the subsystem (100) evens exhaust gas flow between the central region and the peripheral region.

4. The exhaust gas aftertreatment subsystem (100) of any one of preceding claims, wherein
the outlet (140) comprises a perforation field (350) for evening exhaust gas flow between the central region and the peripheral region; wherein
the first housing part is formed from a metal plate; and
the perforation field is formed to the metal plate from which the first housing part is formed.

5. The exhaust gas aftertreatment subsystem (100) of any one of preceding claims, the second housing part (120) comprises technical features such as machine vision alignment markers (380).

6. The exhaust gas aftertreatment subsystem (100) of any one of preceding claims, wherein the inlet (130) resides at the first housing part.

7. The exhaust gas aftertreatment subsystem (100) of any one of preceding claims, wherein the first housing part (110) comprises a first group of accessory mounts (310, 320, 330).

8. The exhaust gas aftertreatment subsystem (100) of claim 7, wherein the first group of accessory mounts (310, 320, 330) and the outlet (140) reside on a same side of the first housing part (110).

9. The exhaust gas aftertreatment subsystem (100) of claim 7 or 8, wherein the accessory mounts (310, 320, 330) of the first group reside on one side of the inlet (310).

10. The exhaust gas aftertreatment subsystem (100) of any one of preceding claims, wherein the first housing part (110) and the second housing part (120) are welded together by a flanged butt weld (210).

11. The exhaust gas aftertreatment subsystem (100) of any one of preceding claims, wherein the second housing part (120) comprises a second group of accessory mounts (310, 320, 330).

12. The exhaust gas aftertreatment subsystem (100) of any one of preceding claims, wherein openings for the inlet (130) and the outlet (140) as well as for the accessory mounts (310, 320, 330) are formed by stamping a metal plate that forms the first housing part (110) and / or a metal plate that forms the second housing part (120).

13. The exhaust gas aftertreatment subsystem (100) of any one of preceding claims, wherein the exhaust aftertreatment subsystem (100) comprises a welding joint ring (810) that resides in a plane for welding together the exhaust aftertreatment subsystem (100) and a subsequent exhaust gas aftertreatment unit.

14. An exhaust gas aftertreatment system (700) comprising the exhaust aftertreatment subsystem (100) of any one of preceding claims and an exhaust gas aftertreatment unit attached with the exhaust gas aftertreatment subsystem (100), wherein the exhaust gas aftertreatment unit is selected from a group consisting of a selective catalytic reduction unit, SCR (710); a diesel particulate filter, DPF (720); a diesel oxidation catalyst (730).

15. A method in an exhaust aftertreatment subsystem, comprising
maintaining (1301) a second housing part fixed to a first housing part;
providing (1302) an inlet at the first housing part, the second housing part, or both the first housing part and second housing part;
providing (1303) an outlet at the first housing part;
forming (1304) a passage jointly by the first housing part and the second housing part;
connecting (1305) the inlet to the outlet by the passage;
guiding (1306) by the passage exhaust gas sideways from the inlet and then turning the exhaust gas to the outlet;
defining (1307) by a first dimension a thickness of the subsystem at a centre of the outlet; and
defining (1308) by a second dimension a maximum opening of the outlet; the first dimension being at most 25 % of the second dimension.
